# EUROPÄISCHE PATENTSCHRIFT

(11) **EP 3 822 513 B1**
(45) Veröffentlichungstag und Bekanntmachung des Hinweises auf die Patenterteilung: **03.08.2022**
(21) Anmeldenummer: 20203285.0
(22) Anmeldetag: 22.10.2020
(51) Int. Cl.: F16H 25/20, F16H 25/24, F16H 61/32

(54) **AKTOR MIT KOMPAKTER INTERNER DREHMOMENTABSTÜTZUNG**
ACTUATOR WITH COMPACT INTERNAL TORQUE SUPPORT
ACTIONNEUR POURVU DE SUPPORT DE COUPLE INTERNE COMPACT

(30) Priorität: 13.11.2019 DE 102019130557
(43) Veröffentlichungstag der Anmeldung: 19.05.2021
(73) Patentinhaber: Schaeffler Technologies AG & Co. KG, 91074 Herzogenaurach (DE)
(72) Erfinder: Greb, Peter, 77833 Ottersweier (DE); Man, Laszlo, 77833 Ottersweier (DE)

(56) Entgegenhaltungen:
- EP-A1- 2 908 028
- WO-A1-2007/144295
- CN-A- 103 795 221
- DE-A1-102018 201 729

## Beschreibung

Die Erfindung betrifft einen Aktor (/ Linearaktor) zum Betätigen zumindest einer Schalteinrichtung eines Kraftfahrzeuges, wie eines Pkws, Lkws, Busses oder sonstigen Nutzfahrzeuges, vorzugsweise zum Betätigen einer Schalteinrichtung eines Getriebes, mit einem Gehäuse, einem in dem Gehäuse aufgenommenen Elektromotor und einem über dem Elektromotor antreibbaren Spindeltrieb, wobei der Spindeltrieb derart ausgebildet ist, dass eine an einer Spindelmutter des Spindeltriebs durch den Elektromotor initiierte Drehbewegung in eine Verschiebebewegung einer Spindelwelle des Spindeltriebs entlang ihrer Längsachse gewandelt wird.

Gattungsgemäße Aktoren sind aus dem Stand der Technik bereits hinlänglich bekannt. Beispielsweise offenbart die DE 10 2017 178 885 A1 eine Betätigungsvorrichtung für ein Kraftfahrzeuggetriebe, mit einem Gehäuse, einem Elektromotor und einem Betätigungsgetriebe mit einer axial verlagerbaren Spindelstange und einer axialfesten Spindelmutter.

Aus der CN 103 795 221 A, EP 2 908 028 A1 und WO 2007/144295 A1 sind jeweils Spindeltriebe bekannt, bei denen eine Drehabstützung der Spindel durch eine Vorsatz und Keil an der Spindel oder einer Spindelmutter realisiert wird, wobei dieser Vorsatz oder Keil dann in eine Ausnehmung eines gehäusefesten Bauteils eingreift.

Aus der DE 10 2018 201 729 A1 ist ferner eine Spindelaufnahme mit einem Abschlussteil in der Art eines Deckels bekannt.

Als Nachteil der aus dem Stand der Technik bekannten Ausführungen hat es sich jedoch herausgestellt, dass die notwendige Drehmomentabstützung der Spindelwellen entweder extern, d. h. außerhalb des Aktors, stattfindet, was eine zusätzliche Belastung der zu betätigenden, mit dem Aktor verbundenen Elemente bewirkt, oder relativ bauraumintensiv umgesetzt ist.

Es ist daher Aufgabe der vorliegenden Erfindung, die aus dem Stand der Technik bekannten Nachteile zu beheben und insbesondere einen Aktor zur Verfügung zu stellen, der möglichst wenig (axialen) Bauraum benötigt und die mit ihm gekoppelten Bestandteile der Schalteinrichtung des Kraftfahrzeuges möglichst gering belastet. Des Weiteren soll der Aktor möglichst als modulare Einheit ausgebildet sein.

Dies wird erfindungsgemäß durch einen Aktor mit den Merkmalen des Anspruchs 1 gelöst, wobei die Spindelwelle direkt relativ zu einem gehäusefesten Führungsbauteil verdrehgesichert abgestützt ist.

Dadurch wird erzielt, dass eine Drehmomentabstützung der Spindelwelle unmittelbar intern, d. h. innerhalb des Aktors, stattfindet. Auch wird somit eine möglichst kompakte Ausbildung des Aktors ermöglicht. Die an die Spindelwelle außerhalb des Aktors angrenzenden Schaltelemente sind zudem deutlich geringer belastet.

Weitere vorteilhafte Ausführungen sind mit den Unteransprüchen beansprucht und nachfolgend näher erläutert.

Demnach ist es auch von Vorteil, wenn das Führungsbauteil zugleich als ein eine Durchtrittsöffnung für die Spindelwelle ausbildendes Deckelelement ausgeformt ist. Dadurch wir die Bauteilanzahl möglichst gering gehalten.

Ist das Führungsbauteil wiederabnehmbar an dem Gehäuse befestigt, ist dieses auf einfache Weise austauschbar und der Aktor auch für Anwendungen, in denen keine interne Abstützung benötigt ist, vorbereitet.

Ist das Führungsbauteil aus einem Metallblech ausgeformt, kann dieses besonders effizient, vorzugsweise durch Umform- und/oder Stanzverfahren, hergestellt werden.

Die verdrehgesicherte Abstützung der Spindelwelle ist erfindungsgemäß möglichst stabil, wenn eine die Spindelwelle relativ zu dem Führungsbauteil verdrehgesichert abstützende Formschlussverbindung eine entlang der Längsachse verlaufende Ausnehmung sowie ein in die Ausnehmung eingreifendes Stützelement aufweist.

In diesem Zusammenhang hat es sich weiterhin als zweckmäßig herausgestellt, wenn die Formschlussverbindung als eine Nut-Feder-Verbindung umgesetzt ist.

Zudem ist es erfindungsgemäß vorgesehen, dass die Ausnehmung unmittelbar an einer Außenumfangsseite der Spindelwelle in Form einer Längsrille / Längsvertiefung eingebracht ist, vorzugsweise in Form einer Nut. Demnach ist es auch von Vorteil, wenn das Stützelement als eine radial vorstehende Lasche des Führungsbauteils ausgebildet ist. Die Lasche ist vorzugsweise stanz- und/oder biegetechnisch hergestellt.

Alternativ hierzu ist es auch von Vorteil, wenn die Ausnehmung als eine in einem axialen Fortsatz des Führungsbauteils unmittelbar eingebrachte Längsrille / Längsvertiefung ausgebildet ist. Die Längsrille ist vorzugsweise als ein Langloch in dem Fortsatz gebildet.

Somit ist es auch zweckmäßig, wenn das Stützelement als ein an der Spindelwelle direkt aufgenommenes radial nach außen von der Spindelwelle aus vorstehendes Durchgreifelement ausgebildet ist. Das Durchgreifelement ist bevorzugt als ein Stift realisiert.

Weiter bevorzugt sind mehrere Ausnehmungen gleichmäßig über den Umfang (radialen Außenumfang) verteilt vorgesehen, wobei in jede Ausnehmung ein Stützelement eingreift. Dadurch brauchen keine Querkräfte abgestützt werden, welche bei unsymmetrischer Anordnung anderweitig abzustützen sind (ggf. mehr Verschleiß, Reibung, etc.).

In anderen Worten ausgedrückt, ist somit erfindungsgemäß eine kompakte Drehmomentabstützung für Getriebe von Linearaktoren realisiert. Die Spindel (Spindelwelle) und ein Endteil (Führungsbauteil) des Gehäuses weisen dafür ineinandergreifende / komplementäre Elemente, wie z. B. Nut und Feder, oder ähnliches, auf. Das Gehäuseendteil kann ein Blechteil sein und austauschbar gegen ein "nicht abstützendes" Bauteil sein. Das Gehäuseendteil kann Blechelemente (Stützelemente) aufweisen, die in eine Nut der Spindel eingreifen. Auch kann die Spindel radiale Durchgreifelemente aufweisen, die durch Langlöcher des axial ausgezogenen Endteils greifen und so das Drehmoment abstützen.

Die Erfindung wird nun nachfolgend anhand von Figuren näher erläutert, in welchem Zusammenhang auch verschiedene Ausführungsbeispiele dargestellt sind.

Es zeigen:
- Fig. 1: eine perspektivische Außenansicht eines erfindungsgemäßen Aktors nach einem ersten Ausführungsbeispiel, wobei ein mit einer Spindelwelle zusammenwirkendes Führungsbauteil gut zu erkennen ist,
- Fig. 2: eine perspektivische Darstellung des in Fig. 1 eingesetzten Führungsbauteils,
- Fig. 3: eine perspektivische Darstellung der in Fig. 1 eingesetzten Spindelwelle,
- Fig. 4: eine Vorderansicht des Aktors nach Fig. 1, sowie
- Fig. 5: eine perspektivische Darstellung eines erfindungsgemäßen Aktors nach einem zweiten Ausführungsbeispiel, in dem ein mit der Spindelmutter fest verbundenes, radial nach außen vorspringendes Durchgreifelement in eine Ausnehmung eines Fortsatzes des Führungsbauteils unmittelbar eingreift.

Die Figuren sind lediglich schematischer Natur und dienen ausschließlich dem Verständnis der Erfindung. Die gleichen Elemente sind mit denselben Bezugszeichen versehen.

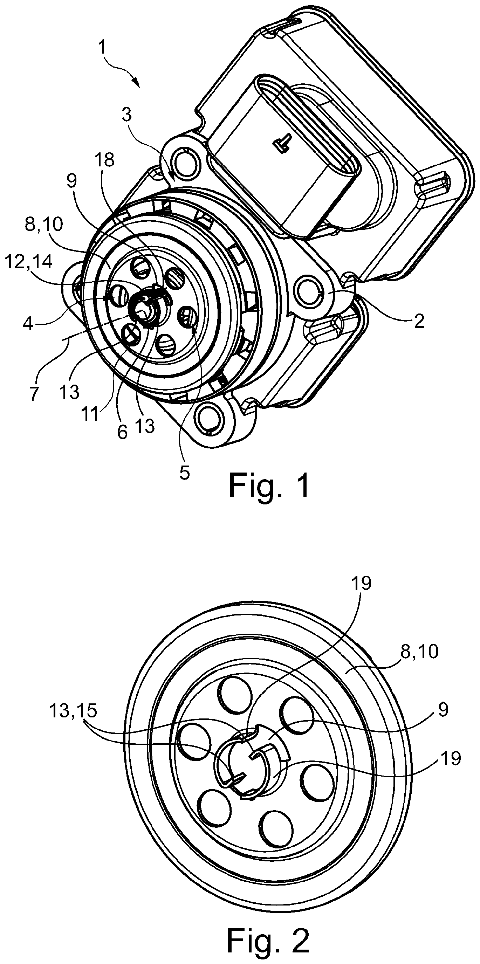

Mit den Fign. 1 bis 4 ist zunächst ein erstes Ausführungsbeispiel eines erfindungsgemäßen Aktors 1 veranschaulicht. Der Aktor 1 ist prinzipiell als ein Linearaktor realisiert und weist einen hier der Übersichtlichkeit halber lediglich hinsichtlich seiner Position angedeuteten Elektromotor 3 auf, der in einem Gehäuse 2 fest aufgenommen ist. Der Elektromotor 3 weist wiederum einen Stator und einen relativ zu dem Stator verdrehbar angeordneten Rotor auf, wobei der Rotor über einen Spindeltrieb 4, der ebenfalls hinsichtlich seiner Position angedeutet ist, mit einer Spindelwelle 6 zusammenwirkt. Auf typische Weise ist der Rotor mit einer Spindelmutter 5 des Spindeltriebs 4 verdrehfest gekoppelt, wobei die Spindelmutter 5 mit einem Innengewinde in ein Außengewinde 18 der Spindelwelle 6 eingreift. Somit kommt es bei einem Verdrehen der Spindelmutter 5 durch den Rotor zu einer Längsverschiebung der Spindelwelle 6 entlang ihrer Längsachse 7.

Der Aktor 1 ist auf typische Weise zum Betätigen einer Schalteinrichtung, etwa zum Schalten einer Getriebeübersetzung und/oder einer Parksperre innerhalb eines Antriebsstranges eines Kraftfahrzeuges eingesetzt. Dabei ist eine hier der Übersichtlichkeit halber nicht weiter dargestellte Betätigungsaktorik mit der Spindelwelle 6 bewegungsgekoppelt, sodass die Verschiebebewegung der Spindelwelle 6 entlang ihrer Längsachse 7 in entsprechende Schaltbewegungen der Schalteinrichtung gewandelt wird.

Erfindungsgemäß ist die Spindelwelle 6 nun direkt relativ zu einem gehäusefesten Führungsbauteil 8 verdrehgesichert abgestützt. Das Führungsbauteil 8 ist in dieser Ausführung als ein Deckelelement 10 des Gehäuses 2 umgesetzt. Die Spindelwelle 6 durchdringt eine zentrale Durchtrittsöffnung 9 des Führungsbauteils 8. Das Führungsbauteil 8 ist in dieser Ausführung über eine wiederlösbare / wiederabnehmbare Verbindung an dem Gehäuse 2 angebracht.

In diesem Zusammenhang ist in Verbindung mit den Fign. 2 bis 4 eine zwischen dem Führungsbauteil 8 und der Spindelwelle 6 umgesetzte Formschlussverbindung 11 zur verdrehgesicherten Abstützung der Spindelwelle 6 erkennbar. Das als Stanzteil realisierte Führungsbauteil 8 weist zwei um etwa 180° zueinander versetzte, radial nach innen ragende Stützelemente 13 in Form von Laschen 15 / Blechlaschen auf. Die Laschen 15 sind an einem axialen Napfbereich 19 des Führungsbauteils 8 unmittelbar ausgeformt.

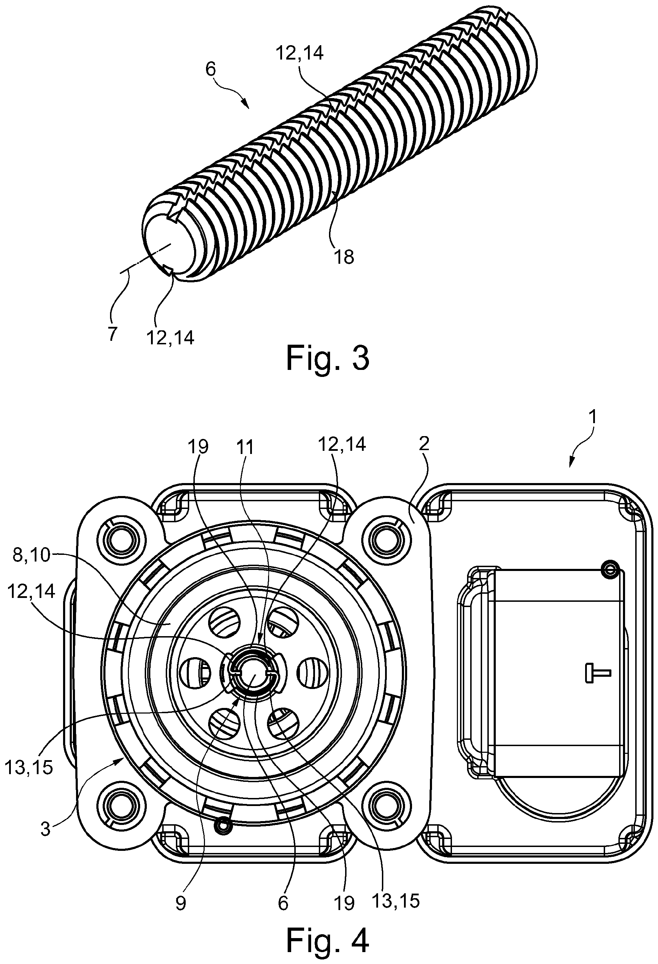

Wie etwa in Fig. 4 gut zu erkennen, ragt jedes Stützelement 13 formschlüssig in eine als Längsrille 14 umgesetzte Ausnehmung 12 an der Außenseite der Spindelwelle 6 hinein. Die Spindelwelle 6 weist somit je Stützelement 13 eine entlang ihrer Längsachse 7 gerade verlaufende Längsrille 14 in Form einer Nut auf, welche die Gewindegänge des Außengewindes 18 unterbricht. Dadurch kommt es im Betrieb zu einem formschlüssigen Eingriff der Laschen 15 in die Längsrille 14 und zu einer verdrehgesicherten Längsverschiebung der Spindelwelle 6 entlang der Längsachse 7. Die Ausnehmungen 12 sind komplementär zu den Stützelementen 13 gleichmäßig über den Umfang / in Umfangsrichtung verteilt angeordnet.

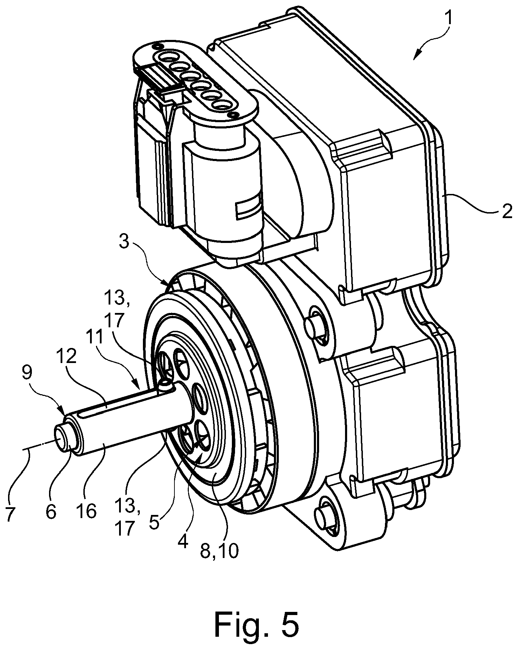

In Verbindung mit Fig. 5 ist ein zweites erfindungsgemäßes Ausführungsbeispiel gezeigt. Die Formschlussverbindung 11 ist nun prinzipiell als eine andere Art einer Nut-Feder-Verbindung umgesetzt. Das Führungsbauteil 8 weist nun einen hülsenförmig vorstehenden Fortsatz 16 auf, der unmittelbar mit den Ausnehmungen 12 in Form von Langlöchern ausgestaltet ist. Der Fortsatz 16 bildet unmittelbar die Durchtrittsöffnung 9 aus. Die Ausnehmungen 12 werden jeweils in radialer Richtung von einem das Stützelement 13 bildenden Durchgreifelement 17, das in der Spindelwelle 6 verdrehfest aufgenommen ist, durchdrungen. Die Durchgreifelemente 17 sind vorzugsweise durch zwei Endbereiche eines radial durch die Spindelwelle 6 hindurchgesteckten Stiftes realisiert.

In anderen Worten ausgedrückt, ist in einer ersten Ausführungsform im (z.B.) Frontblech 8 des Aktors 1 ein axialer, vorzugsweise zylinderförmiger Fortsatz 16, eingearbeitet, welcher mindestens eine radial nach innen hervorstehende (z.B. Blech-) Nase 13, 15 umfasst, welche in (jeweils) eine korrespondierende Nut 12, 14 in der Spindel 6 greift und somit deren Rotation erfindungsgemäß verhindert. Die axiale Ausdehnung dieser Nase 13, 15 ist sehr gering, so dass der zusätzlich erforderliche Bauraumaufwand für die erfindungsgemäße Drehmomentabstützung gering ausfällt. Weiterhin erlaubt der optionale Einsatz eines (einfach zu tauschenden) Frontbleches 8 ohne die Drehmomentabstützung die wirtschaftliche Fertigung von Aktoren 1 mit und ohne eigene (Aktor-interne) Drehmomentabstützung (vorzugsweise in Kombination mit einer Spindel 6 ohne die Nut(en) 12, 14).

### Bezugszeichenliste

- 1: Aktor
- 2: Gehäuse
- 3: Elektromotor
- 4: Spindeltrieb
- 5: Spindelmutter
- 6: Spindelwelle
- 7: Längsachse
- 8: Führungsbauteil
- 9: Durchtrittsöffnung
- 10: Deckelelement
- 11: Formschlussverbindung
- 12: Ausnehmung
- 13: Stützelement.
- 14: Längsrille
- 15: Lasche
- 16: Fortsatz
- 17: Durchgreifelement
- 18: Außengewinde
- 19: Napfbereich

## Patentansprüche

1. Aktor (1) zum Betätigen zumindest einer Schalteinrichtung eines Kraftfahrzeuges, mit einem Gehäuse (2), einem in dem Gehäuse (2) aufgenommenen Elektromotor (3) und einem über den Elektromotor (3) antreibbaren Spindeltrieb (4), wobei der Spindeltrieb (4) derart ausgebildet ist, dass eine an einer Spindelmutter (5) des Spindeltriebs (4) durch den Elektromotor (3) initiierte Drehbewegung in eine Verschiebebewegung einer Spindelwelle (6) des Spindeltriebs (4) entlang ihrer Längsachse (7) gewandelt wird, wobei die Spindelwelle (6) direkt relativ zu einem gehäusefesten Führungsbauteil (8) verdrehgesichert abgestützt ist und eine die Spindelwelle (6) relativ zu dem Führungsbauteil (8) verdrehgesichert abstützende Formschlussverbindung (11) eine entlang der Längsachse (7) verlaufende Ausnehmung (12) sowie ein in die Ausnehmung (12) eingreifendes Stützelement (13) aufweist **dadurch gekennzeichnet, dass** die Ausnehmung (12) als eine in der Spindelwelle (6) unmittelbar eingebrachte Längsrille (14) ausgebildet ist.

2. Aktor (1) nach Anspruch 1, **dadurch gekennzeichnet, dass** das Führungsbauteil (8) zugleich als ein eine Durchtrittsöffnung (9) für die Spindelwelle (6) ausbildendes Deckelelement (10) ausgeformt ist.

3. Aktor (1) nach Anspruch 1 oder 2, **dadurch gekennzeichnet, dass** das Führungsbauteil (8) wiederabnehmbar an dem Gehäuse (2) befestigt ist.

4. Aktor (1) nach einem der Ansprüche 1 bis 3, **dadurch gekennzeichnet, dass** das Führungsbauteil (8) aus einem Metallblech ausgeformt ist.

5. Aktor (1) nach Anspruch 1, **dadurch gekennzeichnet, dass** die Formschlussverbindung (11) als eine Nut-Feder-Verbindung umgesetzt ist.

6. Aktor (1) nach Anspruch 1, **dadurch gekennzeichnet, dass** das Stützelement (13) als eine radial vorstehende Lasche (15) des Führungsbauteils (8) ausgebildet ist.

7. Aktor (1) nach Anspruch 1 oder, **dadurch gekennzeichnet, dass** die Ausnehmung (12) als eine in einem axialen Fortsatz (16) des Führungsbauteils (8) unmittelbar eingebrachte Längsrille (14) ausgebildet ist.

8. Aktor (1) nach Anspruch 7, **dadurch gekennzeichnet, dass** das Stützelement (13) als ein an der Spindelwelle (6) aufgenommenes radiales Durchgreifelement (17) ausgebildet ist.

## Claims

1. An actuator (1) for actuating at least one switching device of a motor vehicle, having a housing (2), an electric motor (3) received in the housing (2) and a spindle drive (4) being drivable by the electric motor (3), wherein the spindle drive (4) is designed in such a way that a rotary movement initiated by the electric motor (3) on a spindle nut (5) of the spindle drive (4) is converted into a displacement movement of a spindle shaft (6) of the spindle drive (4) along its longitudinal axis (7), wherein the spindle shaft (6) is supported directly relative to a guide component (8) fixed to the housing and a form-fitting connection (11) non-rotatably supporting the spindle shaft (6) relative to the guide component (8) has a recess (12) running along the longitudinal axis (7) and a support element (13) engaging in the recess (12), **characterised in that** the recess (12) is designed as a longitudinal groove (14) introduced directly into the spindle shaft (6).

2. The actuator (1) according to claim 1, **characterised in that** the guide component (8) is formed at the same time as a cover element (10) forming a passage opening (9) for the spindle shaft (6).

3. The actuator (1) according to claim 1 or 2, **characterised in that** the guide component (8) is removably fastened to the housing (2).

4. The actuator (1) according to one of claims 1 to 3, **characterised in that** the guide component (8) is formed from sheet metal.

5. The actuator (1) according to claim 1, **characterised in that** the form-fitting connection (11) is implemented as a tongue and groove joint.

6. The actuator (1) according to claim 1, **characterised in that** the support element (13) is designed as a radially projecting lug (15) of the guide component (8).

7. The actuator (1) according to claim 1 or, **characterised in that** the recess (12) is designed as a longitudinal groove (14) introduced directly into an axial extension (16) of the guide component (8).

8. The actuator (1) according to claim 7, **characterised in that** the support element (13) is designed as a radial penetration element (17) received on the spindle shaft (6).

## Revendications

1. Actionneur (1) pour actionner au moins un dispositif de passage de vitesses d'un véhicule automobile, comprenant un boîtier (2), un moteur électrique (3) logé dans le boîtier (2) et un entraînement à broche (4) pouvant être entraîné par le moteur électrique (3), l'entraînement à broche (4) étant conçu de telle sorte qu'un mouvement rotatif initié par le moteur électrique (3) sur un écrou de broche (5) dudit entraînement à broche (4) soit transformé en un mouvement de translation d'un arbre de broche (6) dudit entraînement à broche (4) le long de son axe longitudinal (7), l'arbre de broche (6) étant directement soutenu et protégé contre la rotation par rapport à une pièce de guidage (8) solidaire du boîtier et un assemblage par complémentarité de forme (11) soutenant avec protection contre la rotation l'arbre de broche (6) par rapport à la pièce de guidage (8) présentant un évidement (12) s'étendant le long de l'axe longitudinal (7) ainsi qu'un élément de support (13) venant en prise dans ledit évidement (12), **caractérisé en ce que** l'évidement (12) est formé par une rainure longitudinale (14) réalisée directement dans l'arbre de broche (6).

2. Actionneur (1) selon la revendication 1, **caractérisé en ce que** la pièce de guidage (8) est également formée comme un élément de couvercle (10) formant lui-même une ouverture de passage (9) pour l'arbre de broche (6).

3. Actionneur (1) selon la revendication 1 ou 2, **caractérisé en ce que** la pièce de guidage (8) est fixée au boîtier (2) de manière amovible.

4. Actionneur (1) selon l'une quelconque des revendications 1 à 3, **caractérisé en ce que** la pièce de guidage (8) est formée à partir d'une tôle.

5. Actionneur (1) selon la revendication 1, **caractérisé en ce que** l'assemblage par complémentarité de forme (11) est réalisé sous forme d'un assemblage à rainure et languette.

6. Actionneur (1) selon la revendication 1, **caractérisé en ce que** l'élément de support (13) est formé par une patte (15) en saillie radiale de la pièce de guidage (8).

7. Actionneur (1) selon la revendications 1 ou, **caractérisé en ce que** l'évidement (12) est formé comme une rainure longitudinale (14) réalisée directement dans un prolongement axial (16) de la pièce de guidage (8).

8. Actionneur (1) selon la revendication 7, **caractérisé en ce que** l'élément de support (13) est formé comme un élément d'interaction radial (17) logé sur l'arbre de broche (6).
